# EUROPÄISCHE PATENTANMELDUNG

(11) **EP 1 000 880 A1**
(43) Veröffentlichungstag der Anmeldung: **17.05.2000**
(21) Anmeldenummer: 99114749.7
(22) Anmeldetag: 28.07.1999
(51) Int. Cl.: B65G 21/22

(54) **Kettenführungsschiene**

(30) Priorität: 13.11.1998 DE 19852280
(71) Anmelder: Joma-Polytec Kunststofftechnik GmbH, 72411 Bodelshausen (DE)
(72) Erfinder: Maute, Alexander, 72379 Hechingen-Stetten (DE)
(74) Vertreter: Dreiss, Fuhlendorf, Steimle & Becker, Patentanwälte

(57) **Zusammenfassung**

Die Erfindung betrifft eine Kettenführungsschiene (10,12) zur Führung einer Kette (18) zwischen zwei Kettenrädern mit einem Schienenkörper (10) aus Kunststoff und einer damit verbundenen Führungsleiste (12), die ebenfalls aus Kunststoff besteht, mit einer Laufnut (16) zur Aufnahme der Kette (18).

In die Führungsleiste (12) und den Schienenkörper (10) ist ein Blechbiegeteil (20) eingelegt das sich über die gesamte Länge der Kettenführungsschiene (10,12) erstreckt.

## Beschreibung

Die Erfindung betrifft eine Kettenführungsschiene zur Führung einer Kette zwischen zwei Kettenrädern mit einem Schienenkörper aus Kunststoff und einer damit verbundenen Führungsleiste, die ebenfalls aus Kunststoff besteht, mit einer Laufnut zur Aufnahme der Kette. Neben ihrer Führungsfunktion kann die Kettenführungsschiene auch zum Spannen oder Umlenken von Ketten dienen. Derartige Schienen sind insbesondere erforderlich, wenn Ketten zwischen den Kettenrädern nicht gradlinig verlaufen, sondern sie, weil zum Beispiel Bauteile im Weg sind, aus ihrem gradlinigen Verlauf heraus umgelenkt werden müssen. Ein solches Auslenken der Kette kann auch zum nachträglichen Spannen der Kette erfolgen.

Schließlich stellen derartige Schienen auch eine einfache Führungsmöglichkeit für Ketten dar und können so auch ein Abspringen der Kette von den Kettenrädern verhindern helfen.

Um ein möglichst leichtes und einfaches Gleiten bzw. Rutschen der Kette in der Laufnut der Schiene zu ermöglichen und die Reibungsverluste gering zu halten, werden derartige Schienen in der Regel vollständig aus Kunststoff gefertigt. Die Schiene selber kann dabei verschiedenartig ausgebildet sein. So kann sie einen rechteckigen Querschnitt aufweisen, dessen Breite im Wesentlichen der Breite der Laufnut entspricht. Sie kann aber auch lediglich aus einem schmalen Steg bestehen, der die Führungsleiste, die die Laufnut beinhaltet, trägt. Die Schiene weist dann einen Querschnitt in Form eines T- oder Doppel-T-Profils auf, wobei einer der Querbalken als Führungsleiste dient. Dabei können auch Verstärkungsrippen vorgesehen sein.

Die Verwendung von Schienen aus Kunststoff hat den Nachteil, dass der Kunststoff den hohen Belastungen, die auf die Kettenführungsschiene durch die darüber gleitende Kette wirken, nicht gewachsen ist. Dies gilt insbesondere, wenn die Schiene neben ihrer Führungsfunktion auch noch eine Auslenkung der Kette aus ihrer normalen Laufebene heraus bewirkt oder dieselbe spannt. Eine Kunststoffschiene kann nur bedingt hohe Kräfte abstützen und wird unter der wirkenden Belastung - eventuell sogar bis zum Bruch - verformt.

Es ist daher weiterhin bekannt, die Schiene als Metallgußteil auszubilden und lediglich auf das Gußteil einen Kunststoffgleitbelag aufzubringen, der die Reibungskräfte vermindert. Nachteilig bei dieser Ausgestaltung sind die relativ hohen Kosten für das Gußteil. Darüber hinaus besteht ein Problem, den Gleitbelag dauerhaft und sicher auf preiswerte Weise mit dem metallischen Schienenkörper zu verankern.

Es ist daher die Aufgabe der Erfindung eine Kettenführungsschiene bereitzustellen, die preisgünstig herzustellen ist und trotzdem den hohen Belastungen der über sie hinweg laufenden Kette standhält.

Die Erfindung löst diese Aufgabe durch die Bereitstellung einer Kettenführungsschiene zum Führen, Umlenken und Spannen von Ketten zwischen zwei Kettenrädern, wobei der Schienenkörper und die damit verbundene Führungsleiste aus Kunststoff bestehen und in den Schienenkörper und/oder die Führungsleiste ein Blechteil eingelegt ist. Der Vorteil besteht dabei darin, dass die Schiene anders als bei den bekannten Kettenführungsschienen aus Kunststoff einer höheren Belastung bezüglich Verformbarkeit und Durchbiegung gewachsen ist, wobei gleichzeitig die guten Gleiteigenschaften erhalten bleiben. Darüber hinaus stellt diese Gestaltung einer Kettenführungsschiene eine im Gegensatz zu der aus Guß bestehenden Schiene preisgünstigere Lösung dar, wobei die beiden Materialien (Metall und Kunststoff) auf einfache Weise miteinander verbunden sind, da das Blechteil derart in den Kunststoff eingelegt ist, dass es von diesem zumindest teilweise umschlossen ist. Wenn das Blechteil vollständig umspritzt und somit vom Kunststoff umschlossen ist, bietet dies den Vorteil, dass das Blechteil auf einfache Weise zusätzlich gegen Korrosion geschützt ist. Es ergibt sich so eine dauerhafte, belastungsfähige, formschlüssige Verbindung. Das Blechteil erstreckt sich dabei über die gesamte Länge der Schiene. Alternativ kann das Blechteil auch nur abschnittsweise in die Schiene eingelegt sein.

Nach einem ersten Ausführungsbeispiel kann vorgesehen sein, dass das Blechteil durch den Kunststoff des Schienenkörpers und/oder der Führungsleiste umspritzt, also in den Kunststoff eingespritzt ist. Hierdurch wird auf preisgünstige Weise eine sichere und spielfreie Verbindung der beiden Materialien gewährleistet.

Weiter kann vorgesehen sein, dass das Blechteil ein Blechbiegeteil und/oder ein Blechstanzteil ist. Derartige Blechbiegeteile werden zunächst aus größeren Blechen als Stanzteile ausgestanzt und dann in die gewünschte Form gebogen. Das Stanzen und Biegen stellt ein verhältnismäßig preiswertes Herstellungsverfahren dar. Alternativ können auch einfache, nicht durch Biegen weiterbearbeitete Blechstanzteile verwendet werden.

Desweiteren können nach einem Ausführungsbeispiel Schienenkörper und Führungsleiste integral, also einstückig miteinander verbunden sein. Dies kann insbesondere vorgesehen sein, wenn diese aus dem gleichen Kunststoff bestehen. Aber auch verschiedene Kunststoffe können derart materialschlüssig miteinander verbunden werden, also z.B. miteinander verspritzt werden, dass eine einstückige Verbindung zwischen den Teilen entsteht. Desweiteren sind jedoch auch andere material-, form- oder kraftschlüssige Verbindungsverfahren einsetzbar.

In einer Ausgestaltung kann das Blechbiegeteil einen V- oder U-förmigen Querschnitt aufweisen. Denkbar ist jedoch auch ein L-förmiger Querschnitt oder auch ein einfacher rechteckiger Querschnitt. Beim Vorliegen eines V- oder U-förmigen Querschnitts kann das Blechbiegeteil so gebogen sein, dass die freien Ende des V- oder U-förmigen Blechbiegeteils rechtwinklig in Bezug auf die Mittelachse des Blechbiegeteils nach außen umgebogen sind, also von der Mittelachse weg. Es kann dann derart in dem Schienenkörper bzw. der Führungsleiste angeordnet sein, dass der V- oder U-förmige Teil des Blechbiegeteils im Schienenkörper und die umgebogenen Enden in der Führungsleiste liegen und in dieser in Richtung deren Querausdehnung verlaufen und diese in dieser Richtung stabilisieren. Denkbar ist jedoch auch die Verwendung eines U- oder V-förmigen Biegeteils, dessen Enden nicht umgebogen sind. U- oder V-förmige Blechteile bieten sich insbesondere bei symmetrischen Schienengestaltungen an, die zum Beispiel einen T- oder doppel-T-förmigen Querschnitt besitzen. Dabei kann die Form des Blechteils auch soweit zugebogen sein, dass ein im Wesentlichen T-förmiges Blechteil entsteht.

Bei einem L-förmigen Querschnitt des Blechbiegeteils kann der lange Schenkel des L-förmigen Blechbiegeteils im Schienenkörper und der kurze Schenkel des L-förmigen Blechbiegeteils in der Führungsleiste angeordnet sein. Dies ist insbesondere dann sinnvoll, wenn die Kettenführungsschiene asymmetrisch ist. Das heißt, wenn sie z.B. ebenfalls einen im Wesentlichen L-förmigen Querschnitt aufweist.

Weiterhin kann auch ein einfaches rechteckiges Blechteil verwendet werden, das nicht gebogen, sondern lediglich aus einem Blech ausgestanzt wird und das dann entweder innerhalb der Führungsleiste und/oder innerhalb des Schienenkörpers verläuft. Je nachdem, ob das Blechteil hochkant oder waagerecht in der Schiene angeordnet wird, kann es sich in die Querausdehnung der Führungsleiste hinein erstrecken oder alternativ kann sich das Blechteil auch oder nur durch den Schienenkörper erstrecken und diesen verstärken. Das heißt, das Blechteil kann auch nur im Schienenkörper oder der Führungsleiste angeordnet sein; es kann jedoch auch in beide eingelegt sein.

Weiterhin kann vorgesehen sein, dass das Blechteil Durchbrüche aufweist und die Durchbrüche des Blechteils vollständig vom Kunststoff des Schienenkörpers und/oder der Führungsleiste durchgriffen sind. Hierdurch wird die Verbindung zwischen den Teilen weiter verbessert und damit auch die Übertragung der Belastung vom Kunststoff der Laufnut auf das Blechteil. Die Durchbrüche können dabei vollständig vom Kunststoff ausgefüllt werden. Es können jedoch auch nach dem Umspritzen noch Durchbrüche verbleiben, wobei das Blechteil jedoch im Bereich der Durchbrüche vollständig vom Kunststoff umschlossen ist.

Um die Kettenführungsschiene an einem Bauteil zu befestigen, können der Schienenkörper und das darin angeordnete Blechteil Bohrungen oder Befestigungselemente zur Befestigung der Schiene an dem Bauteil aufweisen. Statt Bohrungen in der Schiene anzubringen, können auch die Durchbrüche, die nach dem Umspritzen verblieben sind, zur Befestigung verwendet werden.

Schließlich kann erwünscht sein, dass der Wärmeausdehnungskoeffizient des Kunststoffes des Schienenkörpers und/oder der Führungsleiste und der Wärmeausdehnungskoeffizient des Blechteils in etwa gleich sind, um Spannungen zwischen den Materialien bei der Erwärmung des Bauteils zum Beispiel aufgrund von Reibung zu verhindern. Dies gilt auch, wenn verschiedene Kunststoffe für Führungsschiene und Schienenkörper verwendet werden. So kommt z.B. die Verwendung von VERTON RF 700-12 EM (Handelsname) in Frage, das mit einem Wärmeausdehnungskoeffizienten von 1,5 x 10⁻⁵ 1/K im Bereich von Metallen liegt. Um den Wärmeausdehnungskoeffizienten des Kunststoffes an den des Bleches anzupassen, können in den Kunststoff z.B. Glasfasern, Kohlefasern oder andere Fasern oder Materialien eingelegt werden.

Weitere Ausgestaltungen der Erfindung ergeben sich aus den Patentansprüchen sowie den sonstigen Unterlagen.

Mögliche Ausgestaltungen der Erfindung sind in der Zeichnung gezeigt, die im Folgenden beschrieben ist.

Dabei zeigen - in schematischer Darstellung:
- Figur 1: eine Schnittdargestellung durch eine erste Kettenführungsschiene,
- Figur 2: eine alternative Ausgestaltung einer Kettenführungsschiene,
- Figur 3: eine Blechbiegeteil zum Einlegen in eine Kettenführungsschiene.

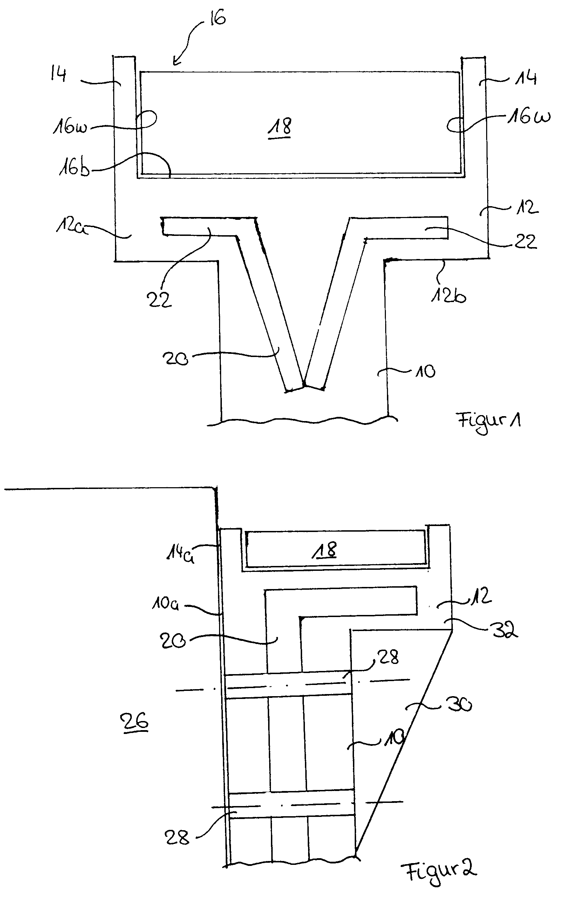

Figur 1 zeigt eine Kettenführungschiene mit einem Schienenkörper 10, der integral mit einer Führungsleiste 12 verbunden ist. Schienenkörper 10 und Führungsleiste 12 bestehen aus Kunststoff und sind einstückig miteinander verbunden. Der Schienenkörper 10 weist einen rechteckigen Querschnitt auf und die Führungsleiste 12 einen U-förmigen, wobei die Führungsleiste 12 im Querschnitt mittig auf dem Schienenkörper 10 angeordnet ist, so dass die Kettenführungsschiene einen im Wesentlichen T-förmigen Querschnitt über ihre gesamte Länge besitzt. Die freien Schenkel 14 der U-förmigen Führungleiste 12 weisen dabei von dem Schienenkörper 10 weg und bilden zwischen sich eine Laufnut 15 aus. Das heißt, Schienenkörper 10 und Führungsschiene 12 sind im Bereich des Bodens 12b der Führungsschiene 12 miteinander verbunden. In der Laufnut 16 wird eine Kette 18 geführt, die auf dem Kunststoff der Flächen 16b und 16w gleitet.

Um die Stabilität der Kettenführungsschiene gegen die auf sie wirkenden Belastungen zu verbessern, ist in die Führungsleiste 12 und den Schienenkörper 10 ein Blechbiegeteil 20 eingelegt, das sich über die gesamte Länge der Kettenführungsschiene erstreckt. Das Blechbiegeteil 20 weist einen V-förmigen Querschnitt auf, wobei die freien Ende 22 des V's senkrecht in Bezug zur Mittelachse des V's von dieser weg (nach außen) umgebogen sind, so dass sie parallel zum Boden 16b der Laufnut verlaufen und in der Basis 12a der Führungsschiene 12 zur Verstärkung der Führungsleiste 12 liegen. Der V-förmigen Anteil des Blechbiegeteils 20 liegt mit seiner Spitze im Schienenkörper 10. Das heißt, die offene Seite des V's weist in Richtung auf die offene Seite der Laufnut 16.

Das Blechbiegeteil 20 besteht aus einem ausgestanzten und gefalzten Metallteil, das eine Vielzahl von Durchbrüchen (nicht dargestellt) aufweist. Es wird zur Herstellung der Kettenführungsschiene mit dem Kunststoff des Schienenkörpers 10 und der Führungsleiste 12 umspritzt, wobei der Kunststoff auch in die Durchbrüche gelangt und so das Blechbiegeteil 20 besonders sicher formschlüssig mit dem Kunststoffmaterial verbunden wird. Das Blechteil 20 wird dabei vollständig vom Kunststoff umschlossen und so gegen Korrosion geschützt.

Die symmetrische Ausgestaltung der Kettenführungsschiene, wie sie in Figur 1 gezeigt ist, weist den Vorteil auf, dass besonders hohe Kräfte aufgenommen werden können, ohne dass es zu einer Verformung der Schiene kommt.

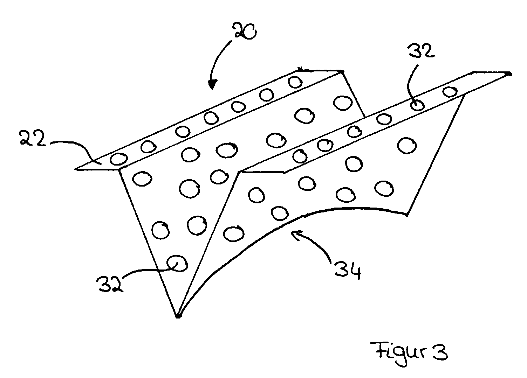

Figur 2 zeigt dagegen eine asymmetrische Kettenführungsschiene, die demgegenüber den Vorteil aufweist, besonders gut einseitig befestigbar zu sein und sich so gegen ein festes Bauteil 25 abstützen zu können. Der Schienenkörper 10 besitzt hierbei wiederum einen rechteckigen Querschnitt. Die U-förmige Führungsleiste 12 ist jedoch nicht mittig auf dem Schienenkörper 10 angeordnet, sondern derart, dass die Außenseite 14a des einen freien Schenkels 14 des U's bündig mit einer der Außenseiten 10a des Schienenkörpers 10 zusammenfällt. Die Kettenführungsschiene besitzt somit den Querschnitt eines umgedrehten L's. Das eingespritzte Blechbiegeteil 20 weist ebenfalls einen L-förmigen Querschnitt auf, wobei der lange Schenkel des L's innerhalb des Schienenkörpers 10 und der kurze Schenkel des L's innerhalb der Führungsleiste 12 angeordnet ist. Der Schienenkörper 10 und das in ihm angeordnete Blechbiegeteil 20 weisen fluchtende Durchgangsbohrungen bzw. Durchbrüche 28 auf, die eine Verschraubung der Kettenführungsschiene an dem Bauteil 26 erlauben. Um die Stabilität zu erhöhen und bei hohen Belastungen ein Abknicken der Führungsleiste 12 zu verhindern, sind Verstärkungsrippen 30 angebracht, die sich zwischen der Führungsleiste 12 und dem Schienenkörper 10 erstrecken. Die Verstärkungsrippen 30 reichen dabei vom Schienenkörper 10 bis zum äußeren freien Ende 32 der Führungsleiste 12.

Figur 3 zeigt in schematischer, perspektivischer Darstellung ein Blechbiegeteil 20, wobei zu erkennen ist, dass das Blechbiegeteil 20 eine Vielzahl von Durchbrüchen 32 aufweist, die beim Umspritzen vom Kunststoff durchgriffen werden. Das Blechbiegeteil 20 weist dabei an der Spritze der V-förmigen Form in Richtung seiner Längserstreckung eine konkave Ausnehmung 34 auf, die also in Richtung auf das offene Ende des V's weist und die durch eine elliptische Ausstanzung aus dem Blechzuschnitt erzeugt worden ist. Die beiden Seiten des V-förmigen Blechbiegeteils sind somit in Längsrichtung nur noch an ihren beiden Enden miteinander verbunden. Durch diese Formgebung wird eine besonders gute Verbindung mit dem Kunststoff bei gleichzeitig hoher Kraftaufnahmefähigkeit gewährleistet.

## Patentansprüche

1. Kettenführungsschiene zur Führung einer Kette (18) zwischen zwei Kettenrädern mit einem Schienenkörper (10) und einer damit verbundenen Führungsleiste (12), die beide aus Kunststoff bestehen und wobei die Führungsleiste (12) eine Laufnut (16) zur Aufnahme der Kette (18) aufweist, **dadurch gekennzeichnet,** dass in den Schienenkörper (10) und/oder die Führungsleiste (12) ein Blechteil (20) eingelegt ist.

2. Kettenführungsschiene nach Anspruch 1, dadurch gekennzeichnet, dass das Blechteil (20) durch den Kunststoff des Schienenkörpers (10) und/oder der Führungsleiste (12) zumindest abschnittsweise umspritzt ist.

3. Kettenführungsschiene nach einem der vorhergehenden Ansprüche, dadurch gekennzeichnet, dass der Schienenkörper (10) und die Führungsleiste (12) einstückig miteinander verbunden sind.

4. Kettenführungsschiene nach einem der vorhergehenden Ansprüche, dadurch gekennzeichnet, dass die Kettenführungsschiene einen symmetrischen oder asymmetrischen Querschnitt aufweist.

5. Kettenführungsschiene nach einem der vorhergehenden Ansprüche, dadurch gekennzeichnet, dass das Blechteil (20) ein Blechbiegeteil und/oder ein Blechstanzteil ist.

6. Kettenführungsschiene nach Anspruch 5, dadurch gekennzeichnet, dass das Blechbiegeteil (20) einen V- oder U-förmigen Querschnitt aufweist.

7. Kettenführungsschiene nach Anspruch 6, dadurch gekennzeichnet, dass die freien Enden (22) des V- oder U-förmigen Blechbiegeteils (20) rechtwinklig in Bezug aüf die Mittelachse des Blechbiegeteils (20) von dieser weg nach außen umgebogen sind.

8. Kettenführungsschiene nach Anspruch 7, dadurch gekennzeichnet, dass der V- oder U-förmige Teil des Blechbiegeteils (20) im Schienenkörper (10) und die umgebogenen Enden (22) in der Führungsleiste (12) angeordnet sind.

9. Kettenführungsschiene nach Anspruch 5, dadurch gekennzeichnet, dass das Blechbiegeteil (20) einen L-förmigen Querschnitt aufweist.

10. Kettenführungsschiene nach Anspruch 9, dadurch gekennzeichnet, dass der lange Schenkel des L-förmigen Blechbiegeteils (20) im Schienenkörper (10) und der kurze Schenkel des L-förmigen Blechbiegeteils (20) in der Führungsleiste (12) angeordnet ist.

11. Kettenführungschiene nach einem der vorhergehenden Ansprüche, dadurch gekennzeichnet, dass das Blechteil (20) Durchbrüche (28, 32) aufweist und die Durchbrüche (28, 32) vollständig vom Kunststoff des Schienenkörpers (10) und/oder der Führungsleiste (12) durchgriffen sind.

12. Kettenführungsschiene nach einem der vorhergehenden Ansprüche, dadurch gekennzeichnet, dass der Schienenkörper (10) und das darin angeordnete Blechteil (20) Bohrungen (28) und/oder Befestigungselemente zur Befestigung der Schiene an einem Bauteil (26) aufweist.

13. Kettenführungsschiene nach einem der vorhergehenden Ansprüche, dadurch gekennzeichnet, dass der Wärmeausdehnungskoeffizient des Kunststoffes des Schienenkörpers (10) und/oder der Führungsleiste (12) und der Wärmeausdehnungskoeffizient des Blechteils (20) in etwa gleich sind.

14. Kettenführungsschiene nach einem der vorhergehenden Ansprüche, dadurch gekennzeichnet, dass in den Kunststoff Glasfasern, Kohlefasern oder andere Fasern eingelegt werden.
